# EUROPÄISCHE PATENTSCHRIFT

(11) **EP 1 597 054 B1**
(45) Veröffentlichungstag und Bekanntmachung des Hinweises auf die Patenterteilung: **08.12.2010**
(21) Anmeldenummer: 04710869.1
(22) Anmeldetag: 13.02.2004
(51) Int. Cl.: B29C 65/78, B65B 9/02

(54) **SCHLAUCH SOWIE VORRICHTUNG UND VERFAHREN ZUR HERSTELLUNG DESSELBEN**
TUBULAR FILM, DEVICE AND METHOD FOR PRODUCING THE SAME
TUYAU, DISPOSITIF ET PROCEDE POUR LE PRODUIRE

(30) Priorität: 14.02.2003 DE 10307678
(43) Veröffentlichungstag der Anmeldung: 23.11.2005
(73) Patentinhaber: Windmöller & Hölscher KG, 49525 Lengerich (DE)
(72) Erfinder: KÖHN, Uwe, 49078 Osnabrück (DE); STEINBERG, Jürgen, 48477 Hörstel (DE); WEBER, Jan, Thorsten, 49525 Lengerich (DE)
(86) Internationale Anmeldenummer: PCT/EP2004/001747
(87) Internationale Veröffentlichungsnummer: WO 2004/072528

(56) Entgegenhaltungen:
- EP-B- 0 783 442
- US-A- 4 085 560
- US-B1- 6 233 903

## Beschreibung

Die Erfindung betrifft eine Vorrichtung und ein Verfahren zur Herstellung eines Schlauches. Des Weiteren wird Schutz für den Schlauch selbst begehrt.

Folienschläuche finden unter anderem bei sogenannten Form, Fill and Seal-Maschinen (im Folgenden FFS-Maschinen) Verwendung. Diese Maschinen, welche unter anderem in den Druckschriften DE 199 33 446, DE 199 20 478, US-A-4,085,560 und DE 199 36 660 gezeigt sind, verfügen über Abwicklungsvorrichtungen, auf denen Schläuche dieser Art gespeichert sind. Von diesen Abwicklungsvorrichtungen wird der Schlauch abgewickelt und zu Schlauchstücken vereinzelt. In weiteren Arbeitsgängen werden in der Regel Schlauchböden gebildet, Füllgut in den entstandenen Sack gefüllt sowie der Sack verschlossen.

In der Regel werden zu diesem Zweck Folienschläuche durch Blasfolienextrusion gebildet, deren Format (hier deren Umfang) mit dem des gebildeten Sackes übereinstimmt. Diese Vorgehensweise führt jedoch dazu, dass schon an den Extrusionsanlagen relativ häufig teure Formatwechsel vorgenommen werden müssen, um unterschiedliche Sackformate realisieren zu können. Darüber hinaus sind die zur Sackbildung benötigten Formate relativ klein und lassen sich relativ unwirtschaftlich erzeugen. Blasfolienanlagen größeren Formats erzeugen gleiche Folie zu geringeren Kosten pro Flächeneinheit.

Daher ist des Öfteren versucht worden, zunächst sehr breite Folienbahnen durch Flachfolienextrusion oder durch Blasfolienextrusion an Anlagen großen Zuschnitts herzustellen, wobei in der Regel ebenfalls in erster Linie aus Kostengründen Blasfolienextrusionsanlagen bevorzugt wurden. Die entstandenen Folienschläuche oder Folienbahnen großen Formats wurden dann durch formatgerechtes Schneiden zu Flachfolienbahnen weiterverarbeitet. Daraufhin wurde eine dieser flachgelegten Folienbahnen zu einem Schlauch zusammengelegt und durch eine Längsschweißnaht zu einem Schlauch verbunden. Ein Nachteil solcher in der Regel sehr kurzer Schläuche besteht darin, dass die durch die Längsschweißnaht verursachte Dickstelle das Aufwickeln des Schlauches erschwert, da die Schlauchrolle teleskopiert, das heißt durch die Addition der Dickstellen eine kegelstumpfartige Form annimmt.

In ähnlicher Weise werden auch Schlauchstücke zur Herstellung höherwertiger Säcke hergestellt. So ist es zum Beispiel bekannt, Seitenfaltenbeutel oder - säcke aus Schlauchstücken herzustellen, welche aus mehreren Folienabschnitten gebildet sind. In der Regel werden zu diesem Zweck die Ränder der jeweiligen Folienabschnitte miteinander verschweißt. Dieser Vorgang wird zwischen Schweißbacken vorgenommen, die das zu verschweißende Material während des Schweißvorganges arretieren.

Dieser Umstand macht eine intermittierende Förderung des Schlauchmaterials während des ganzen Schlauchbildungsprozesses notwendig und führt damit zu geringen Produktionsgeschwindigkeiten.

Daher besteht die Aufgabe der vorliegenden Erfindung darin, ein schneller durchführbares Herstellverfahren zur Herstellung eines Schlauches aus zumindest einer Folienbahn vorzuschlagen.

Diese Aufgabe gemäß Ansprüche 1, 10 und 17 gelöst.

Werden zwei oder mehr Folienbahnen zur Schlauchherstellung verwendet, so werden auch dementsprechend mehr Nähte beziehungsweise Dickstellen verwendet, so dass ein Teleskopieren des Schlauchwickels insbesondere dann unterbleibt, wenn die Dickstellen gleichmäßig über den Außenumfang des Schlauches verteilt sind.

Bei dem oben angeführten Stand der Technik erfolgt die intermittierende Förderung der Schlauchstücke zwischen den verschiedenen Bearbeitungsstufen orthogonal zu den Achsen der Schlauchstücke, um beispielsweise die Boden- oder Deckelbildung besser vornehmen zu können. Dies ist unter anderem in der EP 1 034 918 gezeigt.

Vorteilhaft ist es jedoch, die Schlauchbildung vorzunehmen, während die zumindest eine Folienbahn entlang ihrer Längsseite, welche dann in die Richtung der späteren Sackachse zeigt, gefördert wird. Auf diese Weise kann beispielsweise das Folienmaterial von einer ersten Wickelstelle abgewickelt werden, während der fertige Schlauch auf einen anderen Wickel aufgewickelt wird.

Bei allen Arten von Fügeprozessen ist es von Vorteil, wenn der erfindungsgemäße Fügeprozess über einen gewissen Zeitraum kontinuierlich betrieben wird. Beim erfindungsgemäßen Verfahren kommt noch hinzu, dass sich Schläuche, welche in vorteilhafter Weise weiterverarbeitet werden sollen, eine gewisse Mindestlänge aufweisen sollten. Lange Schläuche dieser Art existieren jedoch bisher nicht, da sie mit den intermittierenden Herstellverfahren, bei denen die Transportrichtung der Schlauchstücke quer zu der Schlauchachse verläuft, nicht herstellbar waren. Bei diesen Verfahren begrenzt die Maschinenlänge die Länge des Schlauches.

In diesem Zusammenhang ist noch einmal zu betonen, dass der in dieser Anmeldung oft verwendete Begriff "fügen" alle Arten von Füge- oder Verbindungsverfahren wie Schweißen, Kleben, durch Extrudat verbinden usw. umfasst.

Es ist von großem Vorteil, den Schlauch unmittelbar nach Fügevorgängen in Richtung der Schwerkraft zu fördern, da flüssiges oder verflüssigtes Material der Fügenaht auf diese Weise nicht aus dem Bereich der Fügenaht läuft.

Es ist von Vorteil, wenn erfindungsgemäße Vorrichtungen über Fügewerkzeuge verfügen, die als Walzen ausgestaltet sind. Die Walzen können den zu fügenden Bereichen der Folien die nötige Anpresskraft vermitteln. Sie können auch als Schweißwalzen ausgestaltet sein und die zu einem thermisch induzierten Fügeprozess nötige Wärmeenergie vermitteln.

Einer der möglichen Fügeprozesse ist das Verkleben mit Hilfe eines wie auch immer gearteten Extrudats, welches z. B. Klebstoff oder Schmelze sein kann. Die möglichen Ausgestaltungen des Extruders, seiner Extrusionseinrichtungen und Düsen sind den Unteransprüchen zu entnehmen. Vorteilhaft ist in diesem Zusammenhang, wenn die Düsen oder Düsenbereiche so verschwenk- oder verfahrbar sind, dass sie im Stillstand nicht die Folienbahn durch Nachtropfen benetzen. Von besonderem Vorteil ist die in der gegenständlichen Beschreibung dargestellte Ausführung der Einrichtung zur Zuführung des Extrudats oder Extruderarms, welcher über zwei Düsen verfügt. Auf die dargestellte Weise können die Randbereiche der beiden Frontfolien A und D mit Extrudat beaufschlagt werden, während diese Folien noch auf den Quetschwalzen 14 und 15 aufliegen und noch nicht in dem Walzenspalt angekommen sind.

Es sei noch einmal erwähnt, dass die Länge des Schlauches für seine Weiterverarbeitungsmöglichkeiten von besonderer Bedeutung ist, da die Bildung eines Schlauchwickels aus dem hergestellten Schlauch kostengünstige und neue Weiterverarbeitungsmöglichkeiten erschließt.

Weitere Ausführungsbeispiele der Erfindung gehen aus der gegenständlichen Beschreibung und den Ansprüchen hervor.

Die einzelnen Figuren zeigen:
- Fig. 1: Seitenansicht einer erfindungsgemäßen Vorrichtung
- Fig. 2: Ansicht der erfindungsgemäßen Vorrichtung aus Figur 1 von oben
- Fig. 3: Den Schnitt I-I aus Figur 1
- Fig. 4: Eine Skizze der Bahnverlaufs vor dem Walzenspalt 50
- Fig. 5: Einen Schnitt durch einen erfindungsgemäßen Schlauch
- Fig. 6: Einen Schnitt durch einen anderen erfindungsgemäßen Schlauch

Die Figuren zeigen eine erfindungsgemäße Vorrichtung 1, deren Funktion im Folgenden vor allem an Hand des Weges der Folienbahn E durch die Vorrichtung 1 beschrieben wird. Die Vorrichtung verfügt über eine Abwicklungsvorrichtung 2, von der die Folienbahn E abgewickelt wird. Die Folienbahn E wird in Richtung des Pfeiles zunächst in Richtung der späteren Schlauchachse z transportiert und über die Umlenkwalzen 3 und 4 der lediglich durch die Linie II - II symbolisierten Schneidestation 5 zugeführt. Die Schneidestation verfügt über nicht dargestellte Schneidwerkzeuge, mit denen die Bahn E zu den Bahnen A, B, C und D zerschnitten wird.

Die Folienbahn A wird an den Wendestangen 6 und 7 zweimal umgelenkt, so dass sie ihre Richtung umkehrt, schließlich entgegen der Richtung z der Fügestelle 8 zugeführt wird. Erwähnenswert ist in diesem Zusammenhang noch, dass die Wendestange 6 in z-Richtung verschiebbar ist, so dass sich das Längsregister der Folienbahn A hier einstellen lässt. Dieser Umstand ist durch den Pfeil 45 angedeutet.

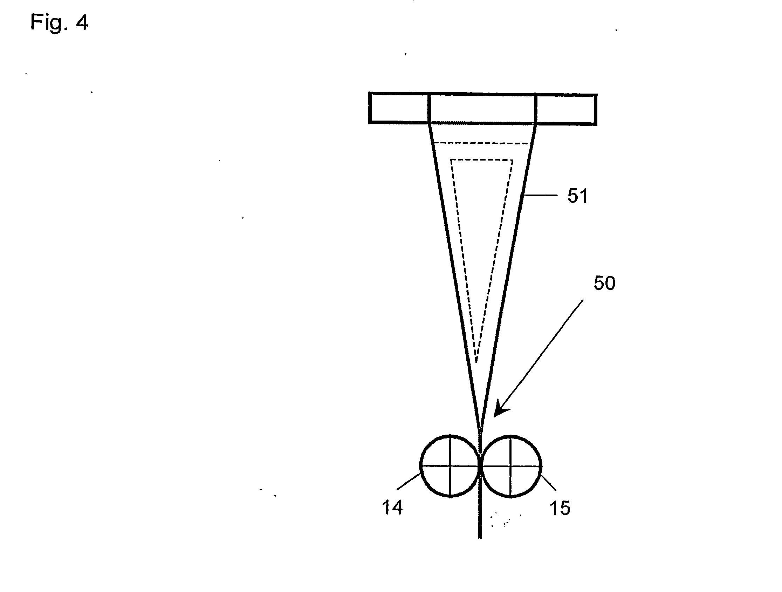

Die Folienbahn B wird über die Walzen 9 und 10, die Wendestange 11 und die Walze 12 geführt. Hierbei bewegt sie sich zeitweise in x-Richtung. Oberhalb der Fügestation 8 läuft die Folienbahn noch über die Walze 13, über die sie in Richtung auf den Walzenspalt 50 zwischen den Abquetschwalzen 14 und 15 geführt wird. Zwischen der Walze 13 und dem Walzenspalt 50 läuft die Bahn über ein in Figur 4 dargestelltes Dreieck 51 aus Profilrohren. Auf diese Weise wird die zuvor flach liegende Bahn B gefaltet, so dass spätestens nach der Abquetschung durch die Walzen 14 und 15 in dem Walzenspalt 50 eine klar definierte Falzkante, welche in dem fertiggestellten Schlauch 25 eine Seitenfalte 26 bildet, entsteht. In Figur 4 wurde auf die Darstellung weiterer Maschinenkomponenten verzichtet.

Die Registerkorrektur an der Bahn B kann durch eine Verschiebung der Walze 12 in x-Richtung vorgenommen werden (Pfeil 46).

Die Folienbahn C wird zunächst über die Walzen 9, 16, 17, und 19 geführt, wobei der Pfeil 20 die Verstellbarkeit der Walze 18 in y-Richtung andeutet, welche wieder eine Längsregisterkorrektur der Bahn C ermöglicht. Nach der Passage der Walze 19 läuft die Bahn C über die Wendestange 21, woraufhin die Bahn C in x-Richtung auf die Walze 22 zuläuft und von dieser nach unten in Richtung auf den von den Walzen 14 und 15 definierten Walzenspalt 50 umgelenkt wird. Die Bildung einer Seitenfalte durch eine Faltung der Bahn C läuft analog zu der oben dargestellten Bearbeitung der Bahn B: Nach der Umlenkung der Bahn C durch die Walze 22 läuft die Bahn über ein nicht dargestelltes Dreieck aus Profilrohren, dessen Spitze auf den Walzenspalt 50 zeigt. Die Bahn C kommt auf diese Weise gefaltet in dem Walzenspalt 50 an. An dieser Stelle sei noch einmal angemerkt, dass es auch andere Möglichkeiten zur Faltenbildung sowohl an Bahnen als auch der Seitenfaltenbildung an Schläuchen oder Säcken gibt, die auch in erfindungsgemäßen Vorrichtungen zum Einsatz kommen können.

Die Flachfolienbahn D läuft, nachdem sie die Schneidestation 5 durchlaufen hat, über die Walzen 9, 23, 30 in den durch die Walzen 14 und 15 definierten Walzenspalt 50. Die durch den Pfeil 24 angedeutete Verstellbarkeit der Walze 23 in y-Richtung ermöglicht eine Registerkorrektur an der Bahn D.

In dem dargestellten Ausführungsbeispiel einer erfindungsgemäßen Vorrichtung 1 werden also alle zur Schlauchbildung benötigten Bahnen A bis D in der Fügestelle 8 oder genauer in dem durch die Walzen 14 und 15 definierten Walzenspalt 50 zusammengefügt.

Um die Fügestellen 27 fest miteinander zu verbinden, wird von den zwei Extrusionsvorrichtungen 31 Extrudat bereitgestellt. Genaugenommen wird das Extrudat in dem Extruder 32, in dem eine Extruderschnecke hohe Drücke erzeugt, bereitgestellt und über die Extruderarme 33a,b über den Walzenspalt 50 der Fügestelle 8 transportiert. Hier wird das Extrudat durch die dafür vorgesehenen Düsen 34a,b, 35a,b auf die Ränder der Bahnen A bis D extrudiert, welche unmittelbar nach diesem Vorgang in dem Walzenspalt 50 miteinander verbunden werden.

In der Regel wird das Extrudat in erhitztem Zustand aufgebracht, so dass die Erkaltung des Extrudats zu einer festen Verbindung der Folienbahnen führt. Als Extrudat können Polyolefine Verwendung finden. Jedoch ist an dieser Stelle auch die Verwendung aller möglichen Formen von Klebstoff oder eine Verschweißung der Ränder der Bahnen in Betracht zu ziehen.

Nach dem Verlassen des Walzenspalts 50 ist der Folienschlauch 25 bereits gebildet. Er wird zunächst in Richtung der Schwerkraft gefördert. Diese Ausrichtung des Schlauches ist für die Verfestigung der Fügestellen 27 beziehungsweise die Verteilung des Extrudats vorteilhaft.

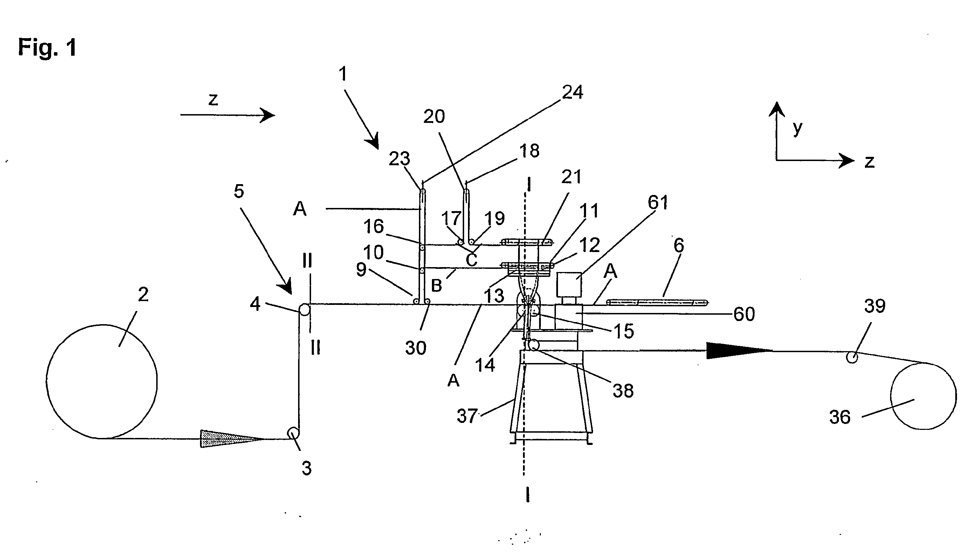

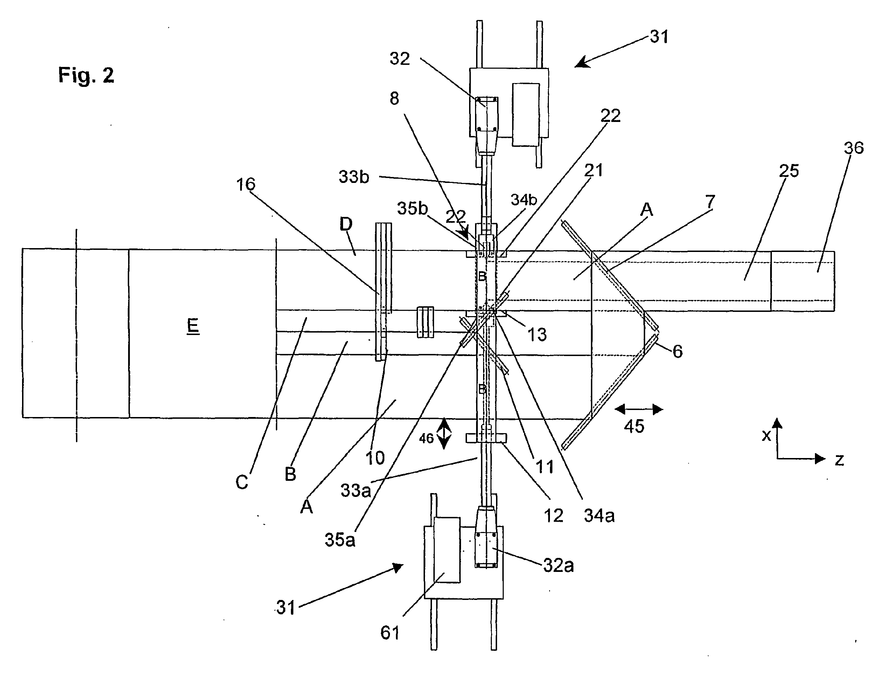

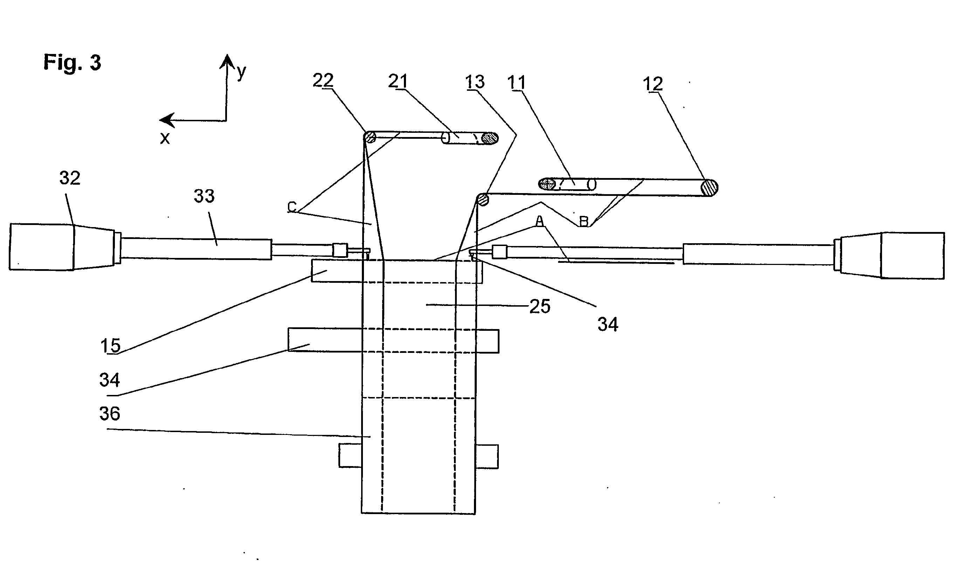

Schließlich läuft der Schlauch 25 über die Walzen 38 und 39 zu der Aufwicklung 36, welche ebenfalls symbolhaft dargestellt ist. Im Zusammenhang mit den beschriebenen Figuren 1 bis 3 sind noch der Motor 60, der über einen nicht dargestellten Riemen Drehmoment auf den Extruder überträgt, der Lüfter 61 und das Maschinengestell 37 erwähnenswert. Auf die Darstellung anderer Halteelemente weiterer Vorrichtungsbestandteile wie Walzen oder Umlenkstangen wurde verzichtet, da die Lagerung und Halterung solcher Bauteile dem Fachmann geläufig sind.

Auch andere im Prinzip bekannte Vorrichtungsbestandteile wie die Auf- und Abwicklung sind lediglich symbolisch dargestellt.

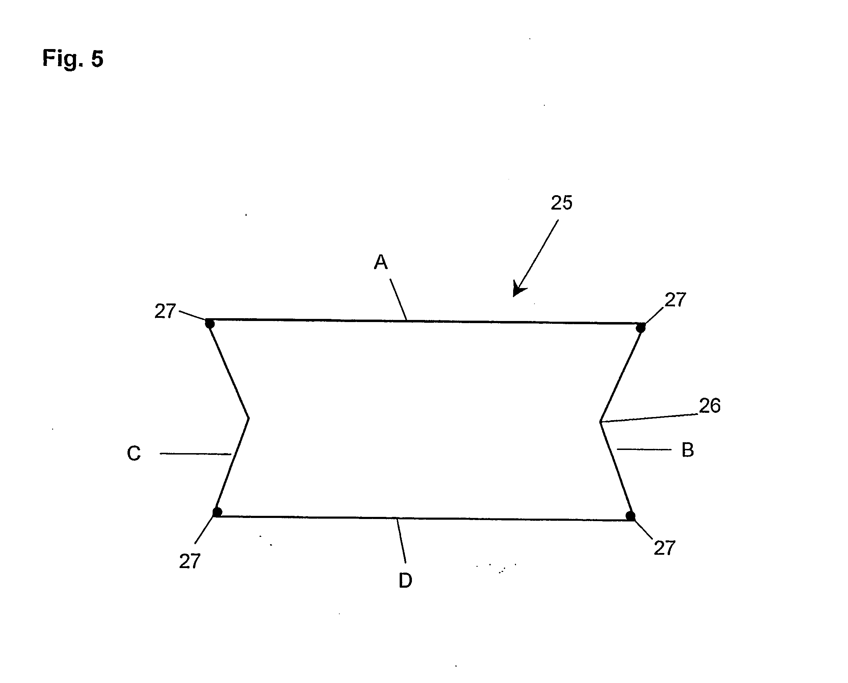

Figur 5 zeigt den Querschnitt eines durch die dargestellte Vorrichtung dargestellten Sackes 25. In der Figur gezeigt sind die Bahnen A-D, die sie verbindenden Fügestellen 27 sowie die Seitenfalten 26.

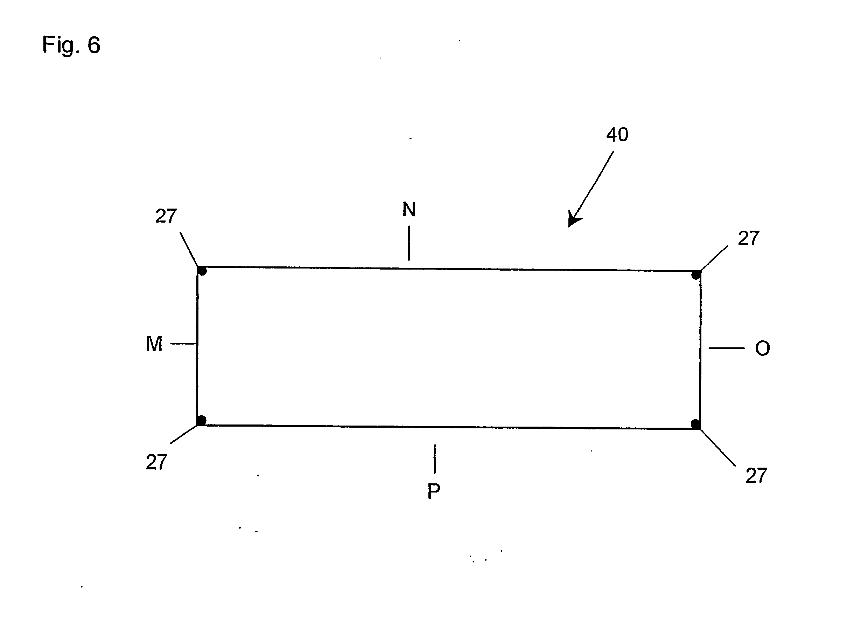

In den Figuren 6 bis 8 werden andere Querschnitte erfindungsgemäßer Säcke dargestellt. Der in Figur 6 dargestellte erfindungsgemäße Schlauch 40 verfügt wie der Schlauch 25 über 4 Fügenähte 27, die vier Bahnen M, N, O, P miteinander verbinden. Im Gegensatz zu dem Schlauch 25 verfügt der Schlauch 40 über keine Seitenfalten 26.

Abschließend sei noch einmal betont, dass sich die dargestellten erfindungsgemäßen Schläuche auch zu anderen Endprodukten als FFS-Säcken weiterverarbeiten lassen dürften. Insbesondere dem Seitenfaltenschlauch 25 dürften sich auch andere Einsatzfelder erschließen.

Zusammenfassend bleibt Folgendes noch aufzulisten: Die erfindungsgemäßen Verfahren kommen in der Regel ohne Formschultern, durch die der Schlauch geformt wird, aus. Beim Fügen der verschiedenen Folienbahnen empfiehlt sich die Verwendung von Zusatzstoffen wie Klebern oder Kunststoffextrudat. Kontaktschweißen kann Schwierigkeiten mit sich bringen. Besonders vorteilhaft ist das Zusammenfügen mehrer Folienbahnen. Bei Seitenfaltensäcken erscheint das Zusammenfügen von vier Bahnen an den Rändern der späteren Seitenfalten empfehlenswert. Angesichts der geforderten Produktionsgeschwindigkeiten sind Schweißelemente und oder Druckvermittlungsvorrichtungen wie Walzen, die stillstehen während die Folie an ihnen vorbeibewegt wird, von Vorteil.

| **Bezugszeichenliste** | |
|---|---|
| 1 | erfindungsgemäße Vorrichtung |
| 2 | Abwicklungsvorrichtung |
| 3 | Umlenkwalze |
| 4 | Umlenkwalze |
| 5 | Schneidestation |
| 6 | Wendestange |
| 7 | |
| 8 | Fügestelle |
| 9 | Walze |
| 10 | Walze |
| 11 | Wendestange |
| 12 | Walze |
| 13 | Walze |
| 14 | Abquetschwalze |
| 15 | Abquetschwalze |
| 16 | Walze |
| 17 | Walze |
| 18 | Walze |
| 19 | Walze |
| 20 | Pfeil |
| 21 | Wendestange |
| 22 | Walze |
| 23 | Walze |
| 24 | Pfeil |
| 25 | Seitenfaltenschlauch |
| 26 | Seitenfalte |
| 27 | Fügestelle |
| 28 | Blindnähte |
| 29 | |
| 30 | Walze |
| 31 | Extrusionsvorrichtung |
| 32 | Extruder |
| 33 | Extruderarme |
| 34 | Düse, Düsenbereich |
| 35 | Düse |
| 36 | Aufwicklung |
| 37 | Maschinengestell |
| 38 | Walze |
| 39 | Walze |
| 40 | Schlauch |
| 41 | erfindungsgemäßer Schlauch |
| 42 | Schlauch |
| 50 | Walzenspalt |
| 51 | Dreieck aus Profilrohren |
| 60 | Motor |
| 61 | Lüfter |
| A-E | Folienbahnen |
| U | Flachschlauchbahn |

## Patentansprüche

1. Verfahren zur Herstellung eines Schlauches (25,40,41,42) aus einem Polymer- und/oder Metallfolienmaterial (A-E),
- welches vor dem Zusammenfügen des Schlauches in Form zumindest einer Folienbahn (A-E) vorliegt,
- deren Ränder in einem Fügeprozess miteinander verbunden werden,
- wobei zumindest eine Längsnaht (27) entsteht,
- wobei der Schlauch während des Fügeprozesses relativ zu den Fügewerkzeugen (14,15,32,33.34,35) bewegt wird,
**dadurch gekennzeichnet, dass**
zumindest vier Folienbahnen (A-E) zur Herstellung des Schlauches verwendet werden, welche durch zumindest vier Längsnähte zusammengefügt werden.

2. Verfahren nach dem vorstehenden Anspruch,
**dadurch gekennzeichnet, dass**
eine fließfähige Substanz auf die zu verbindenden Ränder extrudiert wird.

3. Verfahren nach einem der vorstehenden Ansprüche,
**dadurch gekennzeichnet, dass**
der Schlauch (25,40,41,42) während des Fügeprozesses in Richtung der Schlauchachse (z) gefördert wird.

4. Verfahren nach einem der vorstehenden Anspruche,
**dadurch gekennzeichnet, dass**
eine flüssige Masse auf zumindest einen der jeweils zu verbindenden Ränder der Folienbahn (A,D) extrudiert wird, bevor oder während die Folienränder zusammengefügt werden.

5. Verfahren nach dem vorstehenden Anspruch,
**dadurch gekennzeichnet, dass**
dass es sich bei der flüssigen Masse um eine Polyolefinschmelze handelt.

6. Verfahren nach einem der vorstehenden Ansprüche,
**dadurch gekennzeichnet, dass**
die Flachfolienbahnen (A,D), aus welchen der Schlauch gebildet wird, mindestens eine Minute lang während des Fügeprozesses gefördert werden.

7. Verfahren nach einem der vorstehenden Ansprüche,
**dadurch gekennzeichnet, dass**
Schlauch nach seinem Zusammenfügen zunächst nach unten gefördert wird.

8. Verfahren nach einem der vorstehenden Ansprüche,
**dadurch gekennzeichnet, dass**
zumindest eine erste Flachfolienbahn (B-D) aus einer Mehrzahl von Flachfolienbahnen (A-D), welche durch Längsnähte zu einem Schlauch vereinigt werden, vor dem Zusammenfügen der Folienbahnen in einer anderen Ebene transportiert wird als zumindest eine zweite Flachfolienbahn (A).

9. Verfahren nach einem der vorstehenden Ansprüche,
**dadurch gekennzeichnet, dass**
die Ränder der Folienbahnen (A-D) bei ihrem Zusammenfügen überlappen.

10. Vorrichtung (1) zur Herstellung eines Schlauches (25,40,41,42) aus einem Polymer- und/oder Metallfolienmaterial, weiche Fügewerkzeuge (14,15,32,33,34,35) zum Zusammenfügen der Ränder laufender Folienbahnen (A-D) umfasst,
- wobei das Folienmaterial (A-E) vor dem Zusammenfügen des Schlauches (25,40) in Form zumindest einer Folienbahn (A-E) vorliegt.
- deren Ränder in einem Fügeprozess miteinander verbunden werden,
- wobei zumindest eine Längsnaht (27) entsteht,
**gekennzeichnet durch**
zumindest vier Düsen (34a, 34b, 35a, 35b) über welche eine extrudierte fließfähige Substanz auf zumindest vier zu verbindenen Ränder extrudiert wird.

11. Vorrichtung nach dem vorstehenden Anspruch,
**dadurch gekennzeichnet, dass**
die Fügewarkzeuge (14,15,32,33,34,35) zumindest eine Walze (14,15) umfassen, mit weicher die Ränder zumindest einer Folienbahn (A-D) während des Fügeprozesses mit Druck beaufschlagbar sind.

12. Vorrichtung nach dem vorstehenden Anspruch,
**dadurch gekennzeichnet, dass**
die Fügewerkzeuge (50) zumindest einen Walzenspalt umfassen, in welchem die zu verpressenden Ränder der Folienbahnen (A-D) zusammengedrüdct werden.

13. Vorrichtung nach dem vorstehenden Anspruch,
**gekennzeichnet durch**
ein System von Bahntransport- und Umlenkeinrichtungen, welches eine Mehrzahl von Folienbahnen (A-D) auf unterschiedlichen Wegen in einen Walzenspalt (50) führt.

14. Vorrichtung nach dem vorstehenden Anspruch,
**dadurch gekennzeichnet, dass**
zumindest zwei Einrichtungen (33 a,b) zur Zuführung des Extrudats vorgesehen sind, welche oberhalb eines Walzenspalts (50) angebracht sind und mit denen beide Ränder zumindest zweier Folienbahnen (A,D), welche in dem Walzenspalt (50) zusammengeführt werden, mit Extrudat beaufschlagbar sind.

15. Vorrichtung nach dem vorstehenden Anspruch,
**dadurch gekennzeichnet, dass**
zwei Einrichtungen (33 a,b) zur Zuführung des Extrudats vorgesehen sind, welche jeweils zwei voneinander beabstandete Extrudatdüsenbereiche (34 a,b, 35 a,b) aufweisen, mit denen sich Extrudat auf bei Ränder zweier im Walzenspalt (50) zusammenzuführender Folien extrudieren lässt.

16. Vorrichtung nach einem der drei vorstehenden Ansprüche,
**dadurch gekennzeichnet, dass**
die Düsen oder Düsenbereiche der Einrichter zur Zuführung des Extrudates (33 a,b) quer zu der Förderrichtung (z) der Folienbahnen verschieblich sind.

17. Schlauch (25,40) aus einer Polymer- und oder Metallfolie (A-E,U,V), welcher vier Längsnähte (27) aufweist,
**dadurch gekennzeichnet, dass**
die Schlauchwandungen aus vier Folienbahnen (A-D) bestehen, welche durch vier Längsnähte (27) miteinander verbunden sind.

18. Schlauch (25,40) nach dem vorstehenden Anspruch,
**gekennzeichnet durch**
eine Lange von zumindest 20 Metern.

19. Schlauch (25,40) nach einem der vorstehenden Ansprüche,
**gekennzeichnet durch**
eine Länge von zumindest 50 Metern.

20. Schlauch (25,40) nach dem vorstehenden Anspruch,
**dadurch gekennzeichnet, dass**
zwei der vier Folienbahnen (B,C) Seitenfalten (26) aufweisen.

## Claims

1. Method for producing a tube (25, 40, 41, 42) made of a polymer and/or metal film material (A-E),
- which is available in the form of at least one film web (A-E) before the tube is joined,
- the edges of which are interconnected in a joining process,
- in which at least one longitudinal seam (27) is created,
- in which the tube is moved relative to the joining tools (14, 15, 32, 33, 34, 35) during the joining process,
**characterized in that**
at least four film webs (A-E) are used for producing the tube, which film webs are joined by at least four longitudinal seams.

2. Method according to the preceding claim, **characterized in that**
a free-flowing substance is extruded onto the edges to be connected.

3. Method according to one of the preceding claims, **characterized in that**
the tube (25, 40, 41, 42) is conveyed in the direction of the tube axis (z) during the joining process.

4. Method according to one of the preceding claims, **characterized in that**
a liquid mass is extruded onto at least one of the edges to be connected in each case of the film web (A, D) before or while the film edges are being joined.

5. Method according to the preceding claim, **characterized in that**
the liquid mass is a polyolefin melt.

6. Method according to one of the preceding claims, **characterized in that**
the flat film webs (A, D), from which the tube is formed, are conveyed for at least one minute during the joining process.

7. Method according to one of the preceding claims, **characterized in that**
a tube is firstly conveyed downwards after being joined.

8. Method according to one of the preceding claims, **characterized in that**
at least one first flat film web (B-D) from a plurality of flat film webs (A-D), which are unified to form a tube by longitudinal seams, is transported to a different level than at least a second flat film web (A) before the film webs are joined.

9. Method according to one of the preceding claims, **characterized in that**
the edges of the film webs (A-D) overlap when the latter are joined.

10. Device (1) for producing a tube (25, 40, 41, 42) made of a polymer and/or metal film material, which comprises joining tools (14, 15, 32, 33, 34, 35) for joining the edges of moving film webs (A-D),
- in which the film material (A-E) is available in the form of at least one film web (A-E) before the tube (25, 40) is joined,
- the edges of which are interconnected in a joining process,
- in which at least one longitudinal seam (27) is created,
**characterized by**
at least four nozzles (34a, 34b, 35a, 35b) by means of which an extruded free-flowing substance is extruded onto at least four edges to be connected.

11. Device according to the preceding claim, **characterized in that** the joining tools (14, 15, 32, 33, 34, 35) comprise at least one roll (14, 15), by means of which pressure can be applied to the edges of at least one film web (A-D) during the joining process.

12. Device according to the preceding claim, **characterized in that** the joining tools comprise at least one roll gap (50), in which the edges of the film webs (A-D) to be pressed are pushed together.

13. Device according to the preceding claim, **characterized by**
a system of web transport and deflection arrangements, which guides a plurality of film webs (A-D) into a roll gap (50) along different paths.

14. Device according to the preceding claim, **characterized in that** at least two arrangements (33 a, b) are provided
for supplying the extrudate, which arrangements are affixed above a roll gap (50) and by means of which extrudate can be applied to both edges of at least two film webs (A, D), which are joined in the roll gap (50).

15. Device according to the preceding claim, **characterized in that**
two arrangements (33 a, b) are provided for supplying the extrudate, which each have two spaced apart extrudate nozzle regions (34 a, b, 35 a, b), by means of which extrudate can be extruded onto both edges of two films being joined in the roll gap (50).

16. Device according to one of the three preceding claims,
**characterized in that**
the nozzles or nozzle regions of the arrangements for supplying the extrudate (33 a, b) can be displaced transversely to the conveying direction (z) of the film webs.

17. Tube (25, 40) made of a polymer and/or metal film (A-E, U, V),
comprising four longitudinal seams (27), **characterized in that**
the tube walls consist of four film webs (A-D), which are interconnected by four longitudinal seams (27).

18. Tube (25, 40) according to the preceding claim, **characterized by**
a length of at least 20 metres.

19. Tube (25, 40) according to one of the preceding claims,
**characterized by**
a length of at least 50 metres.

20. Tube (25, 40) according to the preceding claim, **characterized in that**
two of the four film webs (B, C) have side folds (26).

## Revendications

1. Procédé de production d'un tuyau (25, 40, 41, 42) en un matériau de feuille polymère et/ou métallique (A-E),
- qui, avant l'assemblage du tuyau, se présente sous la forme d'au moins une bande en feuille (A-E),
- dont les bords sont reliés l'un à l'autre dans un processus de jonction,
- où au moins une soudure longitudinale (27) est produite,
- où le tuyau, pendant le processus de jonction, est déplacé relativement aux outils de jonction (14, 15, 32, 33, 34, 35),
**caractérisé en ce qu'**au moins quatre bandes en feuille (A-E) sont utilisées pour la production du tuyau, qui sont assemblées par au moins quatre soudures longitudinales.

2. Procédé selon la revendication précédente, **caractérisé en ce qu'**une substance coulante est extrudée sur les bords à joindre.

3. Procédé selon l'une des revendications précédentes, **caractérisé en ce que** le tuyau (25, 40, 41, 42), pendant le processus de jonction, est convoyé en direction de l'axe du tuyau (z).

4. Procédé selon l'une des revendications précédentes, **caractérisé en ce qu'**une masse liquide est extrudée sur au moins un des bords respectivement à joindre de la bande en feuille (A, D) avant ou pendant que les bords de feuille sont assemblés.

5. Procédé selon la revendication précédente, **caractérisé en ce que** dans le cas de la masse liquide, il s'agit d'une fusion de polyoléfine.

6. Procédé selon l'une des revendications précédentes, **caractérisé en ce que** les bandes en feuille plates (A, D) à partir desquelles le tuyau est formé, sont convoyées au moins pendant une minute pendant le processus de jonction.

7. Procédé selon l'une des revendications précédentes, **caractérisé en ce que** le tuyau, après son assemblage, est convoyé tout d'abord vers le bas.

8. Procédé selon l'une des revendications précédentes, **caractérisé en ce qu'**au moins une première bande en feuille plate (B, D) en une pluralité de bandes en feuille plates (A, D), qui sont réunies par des soudures longitudinales en un tuyau, est transportée avant l'assemblage des bandes en feuille dans un autre plan qu'au moins une deuxième bande en feuille plate (A).

9. Procédé selon l'une des revendications précédentes, **caractérisé en ce que** les bords des bandes en feuille (A-D) lors de leur assemblage se chevauchent.

10. Dispositif (1) de production d'un tuyau (25, 40, 41, 42) en un matériau de feuille polymère et/ou métallique, qui comprend des outils de jonction (14, 15, 32, 33, 34, 35) pour la jonction des bords de bandes en feuille mobiles (A-D),
- où le matériau en feuille (A-E), avant l'assemblage du tuyau (25, 40), se présente sous la forme d'au moins une bande en feuille (A-E),
- dont les bords sont assemblés lors d'un processus de jonction,
- où au moins une soudure longitudinale (27) est produite, **caractérisé par** au moins quatre buses (34a, 34b, 35a, 35b) par lesquelles une substance coulante extrudée est extrudée sur au moins quatre des bords à joindre.

11. Dispositif selon la revendication précédente, **caractérisé en ce que** les outils de jonction (14, 15, 32, 33, 34, 35) comprennent au moins un cylindre (14, 15), par lequel les bords d'au moins une bande en feuille (A-D) pendant le processus de jonction, peuvent être chargés en pression.

12. Dispositif selon la revendication précédente, **caractérisé en ce que** les outils de jonction (50) comprennent au moins un espacement entre cylindres, dans lequel les bords à comprimer des bandes en feuille (A-D) sont comprimés.

13. Dispositif selon la revendication précédente, **caractérisé par** un système d'installations de transport et de déviation de bandes qui guide une pluralité de bandes en feuille (A-D) sur des chemins différents dans un espacement entre cylindres(50).

14. Dispositif selon la revendication précédente, **caractérisé en ce qu'**au moins deux installations (33a, b) pour l'amenée de l'extrudat sont prévues, qui sont disposées au-dessus d'un espacement entre cylindres (50) et au moyen desquelles les deux bords d'au moins deux bandes en feuille (A, D) qui sont réunies dans l'espacement entre cylindres(50), peuvent être chargés en extrudat.

15. Dispositif selon la revendication précédente, **caractérisé en ce que** deux installations (33a, b) sont prévues pour l'amenée de l'extrudat, qui présentent chacune respectivement deux zones de buses d'extrudat espacées l'une de l'autre (34a, b, 35a, b) au moyen desquelles l'extrudat peut être extrudé sur des bords de deux feuilles à réunir dans l'espacement entre cylindres (50).

16. Dispositif selon l'une des trois revendications précédentes, **caractérisé en ce que** les buses ou zones de buse de l'installation pour l'amenée de l'extrudat (33a, b) sont déplaçables transversalement à la direction de convoyage (z) des bandes en feuille.

17. Tuyau (25, 40) en une feuille de polymère et/ou métallique (A-E, U, V), qui présente quatre soudures longitudinales (27), **caractérisé en ce que** les parois de tuyau sont constituées de quatre bandes en feuille (A-D) qui sont reliées par quatre soudures longitudinales (27).

18. Tuyau (25, 40) selon la revendication précédente, **caractérisé par** une longueur d'au moins 20 mètres.

19. Tuyau (25, 40) selon l'une des revendications précédentes, **caractérisé par** une longueur d'au moins 50 mètres.

20. Tuyau (25, 40) selon la revendication précédente, **caractérisé en ce que** deux des quatre bandes en feuille (B, C) présentent des plis latéraux (26).
